# EUROPEAN PATENT SPECIFICATION

(11) **EP 1 219 839 B1**
(45) Date of publication and mention of the grant of the patent: **10.03.2004**
(21) Application number: 00500261.3
(22) Date of filing: 19.12.2000
(51) Int. Cl.: F16B 2/06, F16B 7/04

(54) **System for fixing fences or panels to support structure posts**
System zum Verbinden von Zäunen oder Panelen an Tragestrukturen
Système de fixation de clôture ou de panneaux aux structures porteuses

(43) Date of publication of application: 03.07.2002
(73) Proprietor: Moreda-Riviere Trefilerias, S.A., 33211 Gijon (Asturias) (ES)
(72) Inventor: Garcia Martinez, D. Jose Roberto, Trefileria, 33211 Gijon (Asturias) (ES)
(74) Representative: Carpintero Lopez, Francisco

(56) References cited:
- EP-A- 0 341 814
- FR-A- 2 476 246
- GB-A- 2 222 431
- US-A- 4 432 435

## Description

### OBJECT OF THE INVENTION

The present invention relates to a system for fixing panels to posts, based on means suitably related to each other to attach the conventional metal link panels to the corresponding metal posts in order to form fences, enclosures and the like, see e.g. GB-A-2 222 431.

The object of the invention is to provide a system which allows to attach panels consisting of metal links to the respective posts without any contact between metals, providing a longer lifetime and slower oxidation of the metal parts, as well as providing a simple, quick and efficient assembly.

### BACKGROUND OF THE INVENTION

Closures or fences comprising metal link panels which are attached and braced on metal posts which are suitably anchored to the ground or an appropriate base have the disadvantage that the means used for said attachment are also metallic, with the ensuing rubbing of the metal parts and scraping or deterioration of the coating of the elements in contact, which coating is generally a galvanising or polyester, so that not only is the coating damaged but in addition the loss of said coating gives rise to premature oxidation of the metal fence elements, both the metal link panels and the posts, and even the means of attachment.

Additionally, known means either have a simple construction, in which case the attachment is not effective, or they have a sophisticated construction, in which case it is complex to obtain an effective attachment.

### DESCRIPTION OF THE INVENTION

The system disclosed is meant to solve the aforementioned problems using a simple and effective solution, which is based on a metal U-bar clamp which embraces the post without touching it, as the clamp is provided with a plastic part which acts as a cover, comprising two hinged halves, between which is suitably placed the link or links of the metal panel which is to be attached to the post. In this way rubbing between the links and post is prevented, as the former are placed between the two halves of the plastic liner, which is placed on one of the ends of the aforementioned U-bar clamp. The opposite end of this clamp is closed by a wedge formed by a part which is coupled so that it may slide on shaped flanges of the ends of the side arms of said clamp, which wedge is also made of plastic and is secured by a screw. Said wedge is aided by a complement placed on the inner face of the wedge and for which the screw acts as a stop, all of this such that the post only touches the plastic liner and the locking wedge, which is also made of plastic, thus preventing contact of metal to metal and eliminating any possibility of deterioration or scraping of the coating of metal parts as well as the premature oxidation of these elements.

In an example of a preferred embodiment, the half of the plastic liner which is in contact with the inner face of the U clamp is provided with recesses which are complementary of corresponding embedded projections of this inner face of the U clamp, so that a correct position of said plastic liner is obtained with respect to the clamp.

Additionally, the closed position of the two halves of the plastic liner which holds inside the link or links of the metal fence is maintained by a lug which emerges from inner face of each half and is housed in an orifice provided for it in the inner face of the other half.

The sides of the locking wedge are also provided with grooves on its side, inside which slide the flanges of the ends of the U clamp side arms, thus closing the clamp and ensuring the correct locking of the wedge and the clamp. Additionally, the inner complement of the clamp which acts as a stop for the tightening screw is provided with a pair of wings which insert in corresponding grooves made in the opposing surface of said wedge.

Furthermore, the side segments of the clamp are provided near their ends with die-cut tabs. which insert in grooves made for such purpose in the sides of the wedge, thus ensuring a correct insertion and positioning of the wedge and the clamp.

As an option the clamp may be provided on its side segments with transverse recesses which affect its width, in order to allow assembly of unaligned panels at an angle to each other, so that one panel would be held in the described way while one of the links of the other panel would be housed in the corresponding recess and directly locked onto the post.

### DESCRIPTION OF THE DRAWINGS

The characteristics of the invention will be better understood in view of the accompanying drawings of a preferred embodiment of the same, where for purposes of illustration only the following is shown:

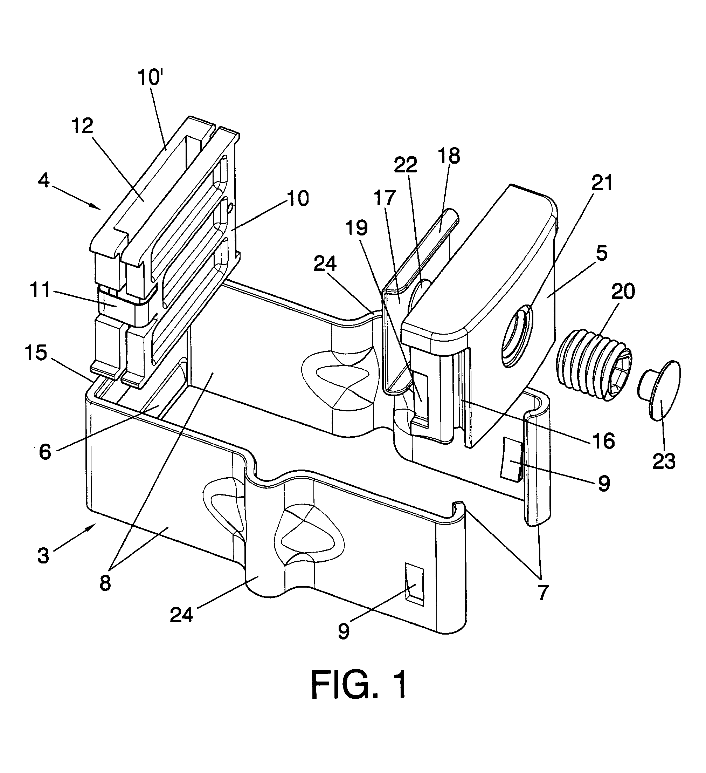

Figure 1.- Shows a general exploded perspective view of the various elements and parts which make up the system for attaching panels to posts.
Figures 2 to 2E.- Show the successive assembly stages or assembly sequence from start to finish.
Figure 3.- Shows a general perspective view of the completed assembly.
Figure 4.- Shows a further perspective view of the completed assembly from the opposite side to Figure 3.

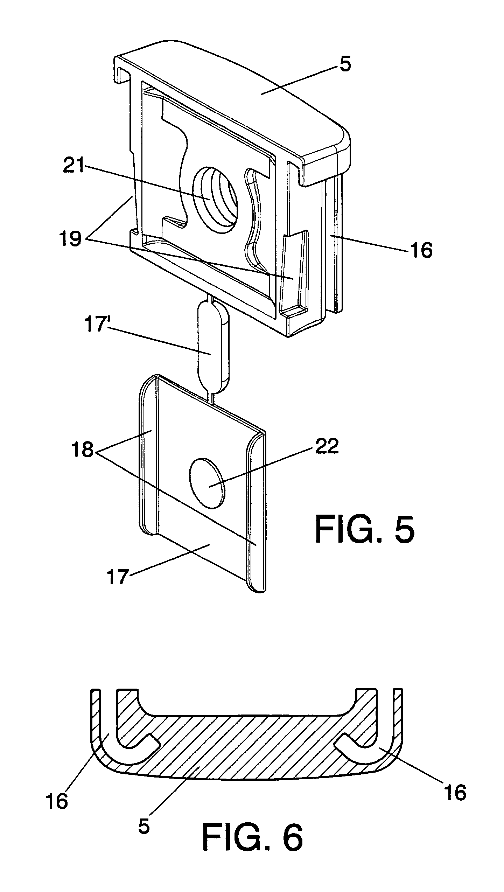

Figure 5.- Shows a perspective view of the part comprising the wedge which closes the clamp, with its complement connected to it.
Figure 6.- Shows a sectional view of the wedge of the previous figure, revealing the lateral grooves in which slide and insert the corresponding clamp edges.
Figure 7.- Finally shows a perspective view of two panels or fences assembled on one post, in which the panels are at an angle to each other.

### PREFERRED EMBODIMENT OF THE INVENTION

As can be seen in the figures, the system for attaching panels to posts, in accordance with the invention, meant to attach links of a metal fence (1) to a post (2), comprises three main elements, suitably related to each other: a U-shaped elongated clamp (3); a plastic liner (4) placed on one end of clamp (3); and a locking wedge (5) placed on the opposite end of said clamp (3), thereby closing it.

Said clamp (3) is provided in its middle segment with recesses (6), and on its opposite open end is provided with inwardly projecting flanges (7), while near the latter and in correspondence with side segments (8) of clamp (3) are internal tabs (9) obtained by die-cutting.

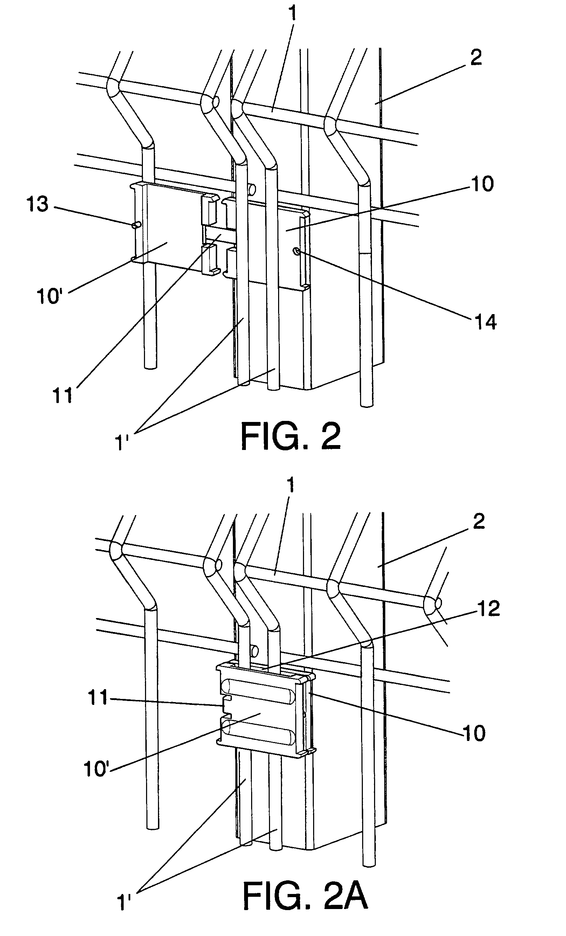

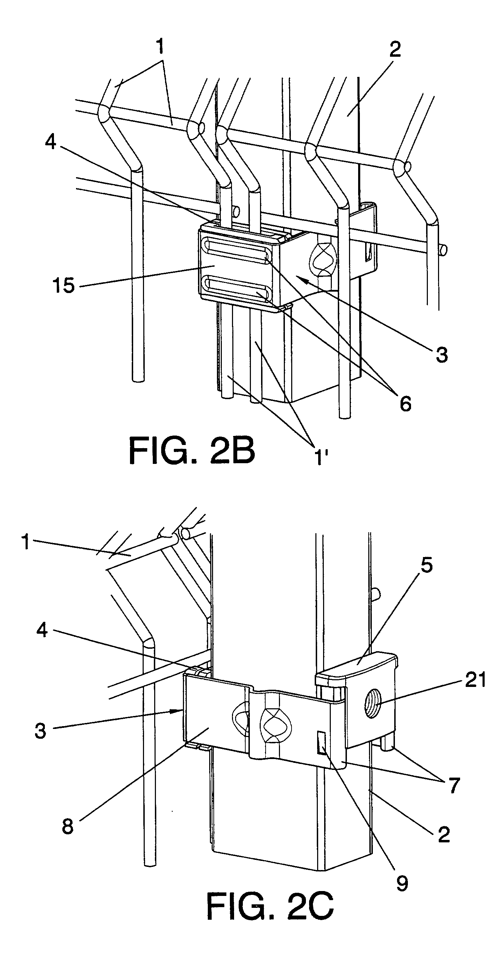

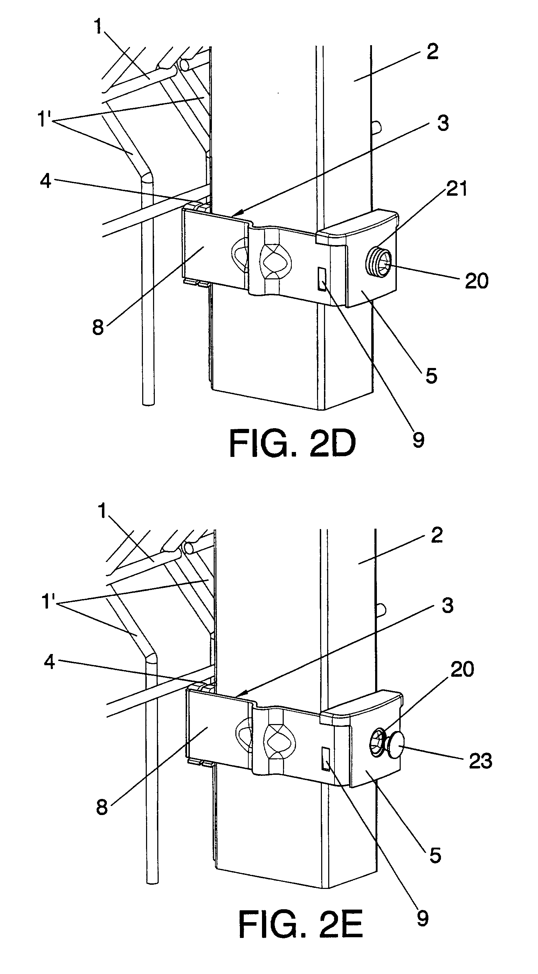

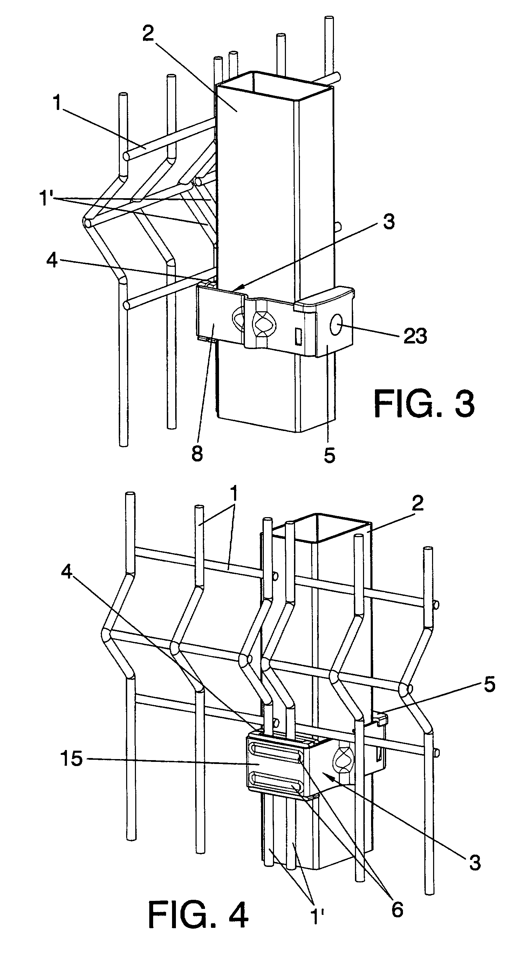

Said clamp (3) is mounted embracing post (2), although it does not touch it due to plastic liner (4), which is on the inside of one of the ends of clamp (3), while wedge (5) is placed on the other end, as shown in figures 2 to 2E and 3, 4 and 7.

Plastic liner (4) comprises two halves (10-10') related to each other by a hinge (11) which allows these halves (10-10') to be opened or closed, in order to define an opening for one or two links (1') of metal fence or panel (1). In other words, as shown in figure 2, plastic liner (4) is first placed with half (10) on the inside of links (1'), between these and post (2), and then the other half (10') is folded on the first half, closing liner (4), thus defining opening (12) in which are placed said vertical links (1') of fence (1), retained between these two halves (10-10') by means of a lug (13) which emerges from one of the halves and inserts in an orifice (14) provided for it in the other half.

Once said plastic liner (4) is placed in the aforementioned manner, clamp (3) is mounted, with its end segment (15) outside liner (4) as shown in figures 2B, 2C, 2D, 3 and 4, while its side segments (8) run parallel to the opposite sides of post (2), and close on the opposite end by means of locking wedge (5), which is connected to the open end of clamp (3) by insertion of inward projecting flanges (7) of side segments (8) of clamp (3) in grooves (16) made for such purpose in the sides of said locking wedge (5). Said wedge is provided with a plastic complement (17), provided with wings (18) which insert in grooves established for it on the inside of wedge (5), which in tum has slits (19) on its sides in which insert tabs (9) of side segments (8) of clamp (3), thus defining a correct locking and positioning of wedge (5) with respect to clamp (3). Wedge (5) and complement (17) leave the mould joined by bridge (17').

Locking wedge (5) has two tapering recesses (19) on its side, which together with internal tabs (9) of the clamp define the relative position of said clamp and wedge.

Once locking wedge (5) is assembled in the aforementioned manner it is finally set and tightened by means of a screw (20) which inserts in an orifice (21) of wedge (5), stopping against a small inner projection (22) provided for such purpose in complement (17), complemented by a plug (23) which is coupled to the end of screw (20) covering it and orifice (21).

In this way, metal fence or panel (1) consisting or links can be easily attached to corresponding posts (2) in a quick, simple and effective manner, while avoiding contact between metals.

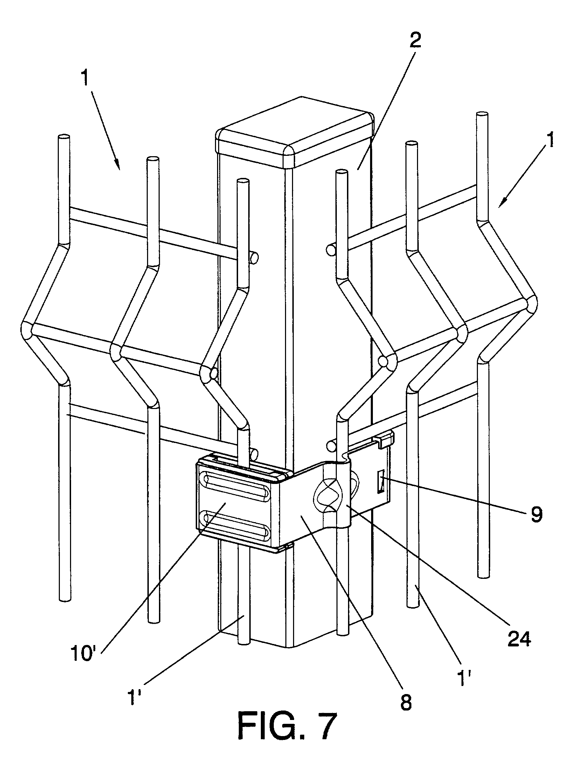

Finally, clamp (3) is provided on the mid section of lateral segments (8) with recesses (24) transverse to said segments (8) along its entire width, which acts as positioning means for links (1') of a fence or panel (1) which is at an angle to another one, as mentioned above. Specifically, Figure 7 shows two fences (1) meeting at a post (2) which form an angle with each other, so that one is attached in the manner described and the other is attached by placing link or links (1') on recesses (24), so that the link of this second fence are pressed against the post.

## Claims

1. System for fixing panels to posts, meant to secure metal link panels or fences (1) to corresponding metal posts (2), forming fences, closures or the like, **characterised in that** it includes a U-shaped elongated clamp (3) complemented by a plastic liner (4) having two hinged halves (10-10'), between which halves are placed links (1') of the corresponding metal fence (1), which plastic liner (4) is placed in correspondence with one of the ends of said clamp (3) while in correspondence with the other end and acting as a means of closing it is placed a locking wedge (5) provided with means for attaching and securing it onto the clamp (3), the locking wedge (5) being complemented by a plastic complement (17) on its inner surface for supporting one of the sides of corresponding post (2), while its opposite side rests on the plastic liner (4).

2. System for fixing panels to posts, as claimed in claim 1, **characterised in that** the mid or end segment (15) of clamp (3). on the inside of which is placed plastic liner (4), is provided with recesses (6) complementary of depressions made in half (10') of said plastic liner (4), which is abutted to the inner surface of said end segment (15) of clamp (3), and plastic liner (4) is provided with means for attaching its two halves (10-10') to each other in the locking position. which means consist of a lug (13) emerging from one of the halves (10') which inserts in an orifice (14) provided for it on the other halt (10).

3. System for fixing panels to posts, as claimed in previous claims, **characterised in that** clamp (3) is provided on the ends of side segment (8) with respective inwardly arching flanges (7) which slide in corresponding grooves (16) made for such purpose in locking wedge (5) for assembly of said wedge, which is secured by lateral tabs (9) of side segments (8) of clamp (3) which insert in grooves (19) provided on the sides of locking wedge (5).

4. System for fixing panels to posts, as claimed in claim 3, **characterised in that** locking wedge (5) includes a threaded orifice (21) for insertion of a locking screw (20) which stops against a projection (22) made on inner complement (17) of wedge (5).

5. System for fixing panels to posts, as claimed in previous claims, **characterised in that** side segments (8) of clamp (3), approximately at their mid point, are provided with transverse recesses (24) which define positioning means for links (1') of a second metal fence (1) which meets the other at post (2) forming an angle with said first fence.

## Patentansprüche

1. System für die Befestigung von Platten an Pfosten, das für die Befestigung von Platten oder Metallzäunen (1) aus Stäbchen an den entsprechenden, ebenfalls metallischen Pfosten (2) vorgesehen ist, für die Bildung von Umzäunungen, Einfriedungen oder ähnlichem, im wesentlichen **dadurch gekennzeichnet, dass** es eine Klammer (3) in Form eines länglichen U umfasst, die mit einer Kunststoffumhüllung (4) ausgestattet ist, die aus zwei um ein Scharnier drehbare Hälften (10-10') besteht, zwischen denen die Stäbchen (1') des entsprechenden Metallzauns (1) angeordnet sind, deren Kunststoffumhüllung (4) in Übereinstimmung mit einem der Endstücke der genannten Klammer (3) angeordnet ist, während in Übereinstimmung mit dem anderen Endstück und als Verschlussmittel desselben ein Verschlusskeil (5) vorgesehen ist, der mit Verankerungs- und Befestigungsmitteln an der Klammer (3) selbst ausgestattet ist, wobei der Verschlusskeil (5) mit einer Kunststoffeinlage (19) versehen ist, die auf der Innenseite angeordnet ist, um an einer der Seitenflächen des entsprechende Pfosten (2) anzuliegen, wobei die gegenüberliegende Seite an der Kunststoffumhüllung (4) anliegt.

2. System für die Befestigung von Platten an Pfosten nach Anspruch 1, **dadurch gekennzeichnet, dass** der mittlere oder am Ende angeordnete Schenkel (15) der Klammer (3), auf dessen Innenseite die Kunststoffumhüllung (4) zu liegen kommt, mit komplementären tiefgezogenen Näpfen (6) entsprechender, zu diesem Zweck in der Hälfte (10') der genannten Kunststoffumhüllung (4) vorgesehenen Vertiefungen ausgestattet ist, wobei diese Umhüllung an der Innenseite dieses am Ende angeordneten Schenkels (15) der Klammer (3) anliegt, wobei weiterhin vorgesehen ist, dass die genannte Kunststoffumhüllung (4) mit Befestigungsmitteln ausgestattet ist, um die beiden Hälften (10-10') in ihrer Verschlussstellung aneinander zu befestigen und diese Mittel aus einem aus einer der Hälften (10') vorstehenden Zapfen (13) bestehen, der in einer zu diesem Zweck an der anderen Hälfte (10) vorgesehenen Öffnung (14) aufgenommen ist.

3. System für die Befestigung von Platten an Pfosten nach den vorhergehenden Ansprüchen, **dadurch gekennzeichnet, dass** die Klammer (3) an den Enden ihrer seitlichen Schenkel (8) jeweils mit Bünden (7) versehen ist, die bogenförmig nach Innen weisen und auf entsprechenden Rillen (16) gleiten, die zu diesem Zweck an dem Verschlusskeil (5) für dessen Montage vorgesehen sind, wonach dieser über die Anordnung von an den seitlichen Aussparungen (8) der Klammer (3) vorgesehene seitliche Ansätze (9) einrastet, die in Nuten (19) zu liegen kommen, die in den Seitenflächen des Verschlusskeils (5) eingearbeitet sind.

4. System für die Befestigung von Platten an Pfosten nach Anspruch 3, **dadurch gekennzeichnet, dass** der Verschlusskeil (5) ein Gewindeloch (21) aufweist, für das Anbringen einer Befestigungsschraube (20), die an einem Vorsprung (22) anschlägt, der zu diesem Zweck an der Inneneinlage (17) vorgesehen ist, die mit dem genannten Verschlusskeil (5) verbunden ist.

5. System für die Befestigung von Platten an Pfosten nach den vorhergehenden Ansprüchen, **dadurch gekennzeichnet, dass** die seitlichen Schenkel (8) der Klammer (3) quer zu ihrer Ausrichtung, ungefähr in Übereinstimmung mit ihrer durchschnittlichen Länge, mit tiefgezogenen Näpfen (24) ausgestattet sind, die Positioniermittel für die Stäbchen (1') eines zweiten Metallzauns (1) darstellen, der mit einem anderen an einem Pfosten (2) zusammenwirkt, wobei diese einen Winkel zwischen sich einschließen.

## Revendications

1. Système pour la fixation de panneaux à des poteaux qui, étant prévu pour fixer des panneaux ou des haies métalliques (1) à tiges sur les poteaux correspondants également métalliques (2) pour former des enclos, des clôtures ou équivalents, est essentiellement **caractérisé en ce qu'**il comprend une bride (3) en « U » allongé, complétée par une doublure en plastique (4) déterminée par deux moitiés (10-10') formant une charnière entre elles, entre lesquelles sont placées les tiges (1') de la haie métallique correspondante (1); dont la doublure en plastique (4) est placée en regard de l'une des parties extrêmes de ladite bride (3), alors qu'une cale de fermeture (5) est placée en regard de l'autre partie extrême comme moyen de fermeture de celle-ci, munie de moyens d'ancrage et de maintien de celle-ci à la propre bride (3), alors que la cale de fermeture (5) est complétée par un supplément de plastique (19) situé sur sa face interne, pour servir d'appui à l'une des faces latérales du poteau (2) correspondant, en appuyant la face opposée sur la doublure en plastique (4).

2. Système pour la fixation de panneaux à des poteaux, selon la revendication 1, **caractérisé en ce que** la partie intermédiaire ou extrême (15) de la bride (3), sur la partie interne de laquelle est située la doublure en plastique (4), dispose d'emboutissages (6) complémentaires de creux correspondants prévus à cet effet sur la moitié (10') de ladite doublure en plastique (4), qui est adossée à la face interne de cette partie extrême (15) de la bride (3), étant prévu en outre que ladite doublure en plastique (4) dispose de moyens de fixation des deux moitiés (10-10') entre elles en position de fermeture, ces moyens étant constitués par un téton (13) émergent de l'une des moitiés (10'), qui est logé dans un orifice (14) prévu sur l'autre moitié (10) à cet effet.

3. Système pour la fixation de panneaux à des poteaux, selon les revendications précédentes, **caractérisé en ce que** la bride (3) dispose sur les extrémités de ses parties latérales (8), avec des rebords (7) respectifs projetés sous forme d'arc vers l'intérieur et coulissant dans les cannelures (16) correspondantes prévues à cet effet sur la cale de fermeture (5) pour le montage de celle-ci, pour demeurer enclavée à travers la mise en place d'onglets latéraux (9) prévus sur les feuillures latérales (8) de la bride (3), qui sont mis en place dans des rainures (19) aménagées sur les faces latérales de la cale de fermeture (5).

4. Système pour la fixation de panneaux à des poteaux, selon la revendication 3, **caractérisé en ce que** la cale de fermeture (5) comprend un orifice fileté (21) pour la mise en place d'une vis (20) de fixation, qui forme un arrêt contre un saillant (22) prévu à cet effet sur le supplément interne (17) lié à ladite cale de fermeture (5).

5. Système pour la fixation de panneaux à des poteaux, selon les revendications précédentes, **caractérisé en ce que** les branches latérales (8) de la bride (3) disposent transversalement, en correspondance approximativement avec sa longueur moyenne, d'emboutissages (24) qui déterminent des moyens de positionnement des tiges (1') d'une deuxième haie métallique (1) qui est raccordée à une autre sur un poteau (2), pour former un angle entre les deux.
